# EUROPEAN PATENT SPECIFICATION

(11) **EP 1 141 569 B1**
(45) Date of publication and mention of the grant of the patent: **17.01.2007**
(21) Application number: 99952234.5
(22) Date of filing: 11.11.1999
(51) Int. Cl.: F16D 43/18

(54) **CENTRIFUGAL FRICTION COUPLING**
FLIEHKRAFTREIBUNGSKUPPLUNG
ACCOUPLEMENT PAR FROTTEMENT CENTRIFUGE

(30) Priority: 23.12.1998 CZ 428598
(43) Date of publication of application: 10.10.2001
(73) Proprietor: Blata, Pavel, 678 01 Blansko (CZ)
(72) Inventor: Blata, Pavel, 678 01 Blansko (CZ)
(74) Representative: Malusek, Jiri
(86) International application number: PCT/CZ1999/000040
(87) International publication number: WO 2000/039476

(56) References cited:
- US-A- 2 446 703
- US-A- 2 771 792
- US-A- 4 728 315
- US-A- 5 096 035
- US-A- 5 165 510

## Description

The invention relates to a centrifugal friction coupling especially of an engine drive unit, where an appropriate positionig of the press springs with a possibility to change characteristics of the spring for regulation of the swinging jaws with clutch linings which is in a friction contact with a drum as a driven unit is solved.

### Discussion of the prior art

Centriugal friction couplings are known in many variations with the use of draw-out and swinging jaws, which are due to the centrifugal force forced with the clutch lining to the inner surface of a drum and in such way they transmit the rotational movement to a driven unit.

According to the Czech patent No.250407 the driven unit of a coupling consists of a dish-shaped disc with a friction lining on the inner cylindrical surface in the proximity of which press segments on the pins of a plate disc of the drive unit of the coupling are turnable arranged. On the free ends of of the press segments tension springs are hanged up and the other end is fixed on the plate disc. The disadvantage of this arrangement is that the pendant eyes of the springs are too strained and they break too often.

In the German patent DE 41 27 540 a centrifugal coupling is provided with three sliding jaws, which due to the centrifugal force overcome the stiffness of the press springs arranged in the hollows of the sliding jaws, which are provided with clutch lining for the friction contact with the drum linked to the driven shaft. Not appropriate positioning of the longitudinal axes of the springs causes by the reotation change of their characteristics because they are loaded by the centrifugal force in dependance on its own weight and turns of the engine. To achieve the pre-set moment for the activation of the coupling it is necessary to use a spring with greater or smaller stiffness, it means usually springs with different diameters. Because of the limited inner space of the coupling is the assembly of bigger springs difficult. The change of the activation moment of the coupling can be achieved only by the change of the springs with various characteristics. It means higher costs.

An other frequent problem of known coupling is a nonuniform wear off of the clutch lining due to a nonuniform load of ot the turning pins and holes in the swinging jaws. This problem occurs by the couplings where the axe of the spring hanged up on the swinging jaw is not symmetrical with the width of the cluch lining. Clutch lining has to be changed too often.

In the document US 2,771,792 an engine cooling fan drive gearing is presented. In this solusion a problem of cooling of the engine by low turns of the machine is solved. There is a stable contact of the centrifugal friction element conected to the fan and the drum because of a hole in the drum where the element is pressed into and because of this the fan is turned also by the idle run f the shaft. Because of this arrangement the fan rotates and this enhance the stream of the air brought against the engine and in this manner the engine is cooled. When the turns of the shaft are higher and there is enough air comming against the engine and due to the weight members the element is out of the hole in the drum and the contact is interrupted and the fan does not rotate any more. This solution does not solve the problem how to bring the friction elements to the drum of the clutch in the moment when the engine goes into the higher turns and it is necessary to tranfer the turns onto the shaft to perform its funtion.

In the document US 5,096,035 there is a centrifugal friction coupling for limiting of the alternator's speed. By this friction coupling three friction pads are interconneted by three tension springs. Each sprig is on both ends mounted in the free end of each pad. On the free end of each pad there are two springs mutually mounted and the whole configuration of the springs is in the shape of a triagle. This construction is complicated, relatively massive and tension springs are not appropriate for classic engine couplings by motorbikes.

The aim of the invention is to present a centrifugal friction coupling with small dimentions and simple construction for minibikes.

### Summary of the invention

The above mentioned disadventages are substantially eliminated by providing centrifugal friction coupling where the press springs for the pressing off of the clutch linings from the drum is arranged off the central drum's axis along the inner surface of the swinging jaw and the longitudinal axe of the spring is perpendicular to the radial component of the centrifugal force. This ensures an effective and compact construction of the clutch and an elimination of the influence of the centrifugal force on the characteristics of the press spring.

In another embodiment the longitudinal axe of the spring is parallel to the carrier plate in the plain of the half width of the cluch lining. This ensures an uniform wear off of the clutch lining.

In another embodiment a projection is on the contact surface for the press spring provided by a foot pin and the projection is on the contact surface provided with a sattle for fixation of the front surface of the press spring. This ensures good fixation of the spring on the projection.

### Detailed description of the drawings

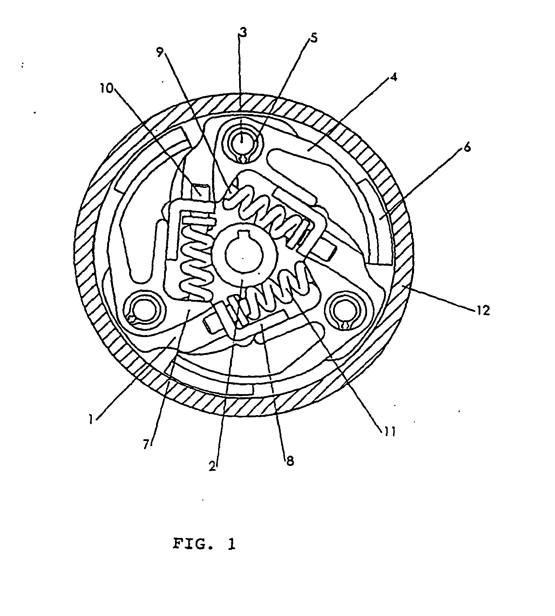

The preferred embodiment will be more clearly illustrated in reference to the drawing where the figure illustrates a front view of a centrifugal friction coupling according to the invention in the direction from the drum.

### Detailed description of the preferred embodiment

A centrifugal friction coupling according to the invention illustrated in the figure consists of a drive unit linked to an engine unit and of a driven unit, which is linked by use of a chain e.g. to a driven wheel of a small motor cycle.

The drive unit of the coupling consists of a hub 2 which is fixed to a carrier plate 1 the shape of which is determined by the number of carried swinging jaws 4. On the inner surface of the carrier plate 1 main pins 3 are arranged. Around these main pins 3 the swinging jaws 4 are turnable arranged and secured with retaining rings 5. Swinging jaws 4 are provided on the outer round face with clutch lining 6. The other end of the swinging jaws 4 is just under the main pin 3 provided with a projection 7 orientated to the centre of the coupling. The contact surface of the projections 7 is provided by a foot pin 9. Against the projections 7 holders 8 in the "L" shape are arranged and these are fixed to the carrier plate 1. On the shorter shoulders of the holders 8 sattle pins 10 are screwed in. Between them and the projections 7 press springs 11 are arranged. The outer surface of the longer shoulders is in contact with the inner surface of the swinging jaws 4.

The drive unit of the coupling is positioned inside of a drum 12 which is the driven unit of the coupling.

By starting of the engine and turning of its shaft also the carrier plate 1 with the hub 2 is rotated. Also the swinging jaws 4 with the clutch lining 6 are brought into the rotation and due to the radial component of the centrifugal force the springs 11 are effected by the swinging movement of the projections 7. At a certain engine speed the stiffness of the springs 11 is overcome and a friction contact between the clutch lining 6 and the drum 12 is enabled. By turning of the screwed sattle pins 10 it is possible to set the precise moment of the activation of the coupling in dependance on a certain engine speed. By decline of the engine speed to an idle run or by its switching off or when the force of the spring 11 overcome the radial component of the centrifugal force, due to the force of the spring 11 the projection 7 is forced away and also the clutch lining 6 is out of contact with the drum 12 and the drive wheel of a motor cycle is not driven any more.

Of cource the principle of the invention is not limited only to the above mentioned embodiment.

The coupling according to the invention can be used for engines for small motor cycles, scooters, minibikes, go-karts, power saws or other smaller garden equipment.

## Claims

1. A centrifugal friction coupling especially of an engine drive unit, said coupling having a drive unit in use to be connected to an engine which consists of a carrier plate (1) with swinging jaws (4) provided with clutch linings (6) for a friction contact with the inner surface of a drum (12), which in use is a driven unit, wherein the carrier plate (1) is provided with holders (8) for press springs (11) which are leaned with one end directly against the swinging jaws (4) through a projection (7), on each swinging saw (4), **characterized in that** the press springs (11) for the pressing off of the clutch linings (6) from the drum (12) are arranged with the other ends in sattle pins (10) and are arranged off the central drum's axis along the inner surface of the swinging jaw (4) and the longitudinal axe of the spring (11) is perpendicular to the radial component of the centrifugal force.

2. A centrifugal friction coupling according to the claims 1 or 2, **characterized in that** the longitudinal axe of the spring (11) is parallel to the carrier plate (1) in the plain of the half width of the clutch lining (6).

3. A centrifugal friction coupling according to the claim 1, **characterized in that** the projection (7) is on the contact surface for the press spring (11) provided with a foot pin (9).

4. A centrifugal friction coupling according to the claim 1, **characterized in that** the projection (7) is on the contact surface provided with a sattle for fixation of the front surface of the press spring (11).

## Patentansprüche

1. Fliehkraftreibungskupplung insbesondere für eine Antriebsmotoreinheit die aus einer Antriebseinheit besteht, die beim Eingreifen mit dem Motor gekoppelt ist, und die von einer Mitnehmerplatte (1) mit schwenkbaren Backen (4) gebildet ist, die mit dem Kupplungsbelag (6) für das Reibkontakt mit der inneren Zylinderfläche des Trommels (12), der beim Eingreifen die angetriebene Einheit darstellt, augestattet ist, wobei die Mitnehmerplatte (1) mit den Haltern (8) für die Druckfeder (11) versehen ist, die mit einem Ende direkt an die schwenkbaren Backen (4) über die Ansätze (7) abgestützt sind, **dadurch gekennzeichnet, daß** die Druckferder (11) für das Wegdrücken des Kupplungsbelages (6) von dem Trommel (12) mit einem Ende in dem Sattelzapfen (10) angeordnet sind und außerhalb der Zentralachse des Trommels (12) auf der innneren Seite der schwenkbaren Backen (4) angeordnet sind und die Längsachse der Druckfeder (11) ist senkrecht zur Radialkomponente der Fliehkraft.

2. Fliehkraftreibungskupplung nach dem Anspruch 1, **dadurch gekennzeichnet, daß** die Längsachse der Druckfeder (11) parallel mit der Mitnehmerplatte (1) in der Ebene von einer Hälfte der Breite des Kupplungsbelages (6) ist.

3. Fliehkraftreibungskupplung nach dem Anspruch 1, **dadurch gekennzeichnet, daß** der Ansatz (7) auf seiner Kontaktfläche für die Druckfeder (11) mit einem Fußzapfen (9) versehen ist.

4. Fliehkraftreibungskupplung nach dem Anspruch 1, **dadurch gekennzeichnet, daß** der Ansatz (7) auf seiner Kontaktfläche für die Druckfeder (11) mit einem Sattel für die Fixation der Stirnfläche der Druckfeder (11) versehen ist.

## Revendications

1. Accouplement par frottement centrifuge, destiné en particulier à l'unité motorisée propulsif constituée de l'unité propulsif qui est en sa engrenement reliée au moteur et qui est constituée du plateau d'entraînement (1) avec mâchoires basculantes (4) muni avec la garniture d'accouplement (6) pour le contact à friction avec surface interne cylindrique du tambour (12) lui-même constituant l'unité entraînée en engrenement, le plateau d'entraînement (1) étant muni des supports (8) pour les ressorts de pression (11) qui s'appuient par l'une des extrémités sur la mâchoire basculante (4) même, à travers les saillies (7), **caractérisé en ce que**, les ressorts de pression (11) pour la repoussement de la la garniture d'accouplement (6) du tambour (12) sont disposés par l'une extrémité dans le pivot de la selle (10) en dehors de l'axe central du tambour sur le côté interne des mâchoires basculantes (4), et l'axe longitudinal des ressorts (11) est perpendiculaire à la composante radiale de la force centrifuge.

2. Accouplement par frottement centrifuge selon la revendication 1 **caractérisé en ce que** l'axe longitudinal du ressort de pression (11) est parallèle au plateau d'entraînement (1) au niveau de la moitié de la largeur de la garniture d'accouplement (6).

3. Accouplement par frottement centrifuge selon la revendication 1 **caractérisé en ce que** la saillie (7) est sur la surface de contact pour le ressort de pression (11) pourvue du pivot (9).

4. Accouplement par frottement centrifuge selon la revendication 1 **caractérisé en ce que** la saillie (7) est sur la surface de contact pourvu de la selle pour la fixation de la surface frontale du ressort de pression (11).
